# EUROPEAN PATENT SPECIFICATION

(11) **EP 4 448 807 B1**
(45) Date of publication and mention of the grant of the patent: **04.11.2026**
(21) Application number: 21830340.2
(22) Date of filing: 15.12.2021
(51) Int. Cl.: C21B 15/00, C25C 1/06, C25C 7/00

(54) **APPARATUS FOR PRODUCTION OF IRON METAL BY ELECTROLYSIS**
VORRICHTUNG ZUR HERSTELLUNG VON EISENMETALL DURCH ELEKTROLYSE
APPAREIL DE PRODUCTION DE MÉTAL FERREUX PAR ÉLECTROLYSE

(43) Date of publication of application: 23.10.2024
(73) Proprietor: ArcelorMittal, 1160 Luxembourg (LU)
(72) Inventor: LAVELAINE DE MAUBEUGE, Hervé, 57000 Metz (FR)
(74) Representative: Lavoix
(86) International application number: PCT/IB2021/061736
(87) International publication number: WO 2023/111639

(56) References cited:
- WO-A1-2009/114925
- WO-A1-2018/152628
- RU-C1- 2 149 921
- US-A- 4 058 441
- US-A1- 2013 140 171
- LAVELAINE DE MAUBEUGE HERVÉ: "Development of new methodologieS for InDustrial CO2-freE steel pRoduction by electroWINning", 31 December 2018 (2018-12-31), pages 1 - 23, XP055941742, Retrieved from the Internet <URL:https://www.siderwin-spire.eu/sites/siderwin.drupal.pulsartecnalia.com/files/documents/SIDERWIN-Project%20Presentation%20-%20WEB_v0.1.pdf> [retrieved on 20220712]

## Description

The invention is related to an apparatus to produce iron metal from iron oxides by an electrolysis process.

Steel can be currently produced at an industrial scale through two main manufacturing routes. Nowadays, most commonly used production route consists in producing pig iron in a blast furnace, by use of a reducing agent, mainly coke, to reduce iron oxides. In this method, approx. 450 to 600 kg of coke, is consumed per metric ton of pig iron, this method, both in the production of coke from coal in a coking plant and in the production of the pig iron, releases significant quantities of CO₂.

The second main route involves so-called "direct reduction methods". Among them are methods according to the brands MIDREX, FINMET, ENERGIRON/HYL, COREX, FINEX etc., in which sponge iron is produced in the form of HDRI (Hot Direct Reduced Iron), CDRI (cold direct reduced iron), or HBI (hot briquetted iron) from the direct reduction of iron oxide carriers. Sponge iron in the form of HDRI, CDRI, and HBI usually undergo further processing in electric arc furnaces. Even if this second route emits less CO2 than the previous one it still releases some and rely moreover on carbon fossil fuels.

Current developments thus focus on methods allowing to produce iron which release less or even no CO₂ and which is carbon-neutral.

A known alternative method to produce steel from iron ores made of iron oxides is based on electrochemical techniques. In such techniques, iron is produced from iron oxide using an electrolyser unit comprising two electrodes - an anode and a cathode - connected to a source of electric current, an electrolyte circuit and an iron oxide entry into the electrolyser unit. The anode and cathode are constantly immersed in the circulating electrolyte in order to ensure good electrical conduction between said electrodes. The electrolytic reaction produces pure iron plates on the cathode and gaseous oxygen at the anode. Iron plates thus obtained may then be melted with other elements such as a carbon source and scrap in electric furnaces to produce steel. US 4 058 441 A and WO 2009/114925 A1 further disclose an apparatus for production of iron metal by electrolysis.

In order to limit the environmental footprint of the process, electrolyte is recirculated within the cell to limit the need of fresh electrolyte. In order to do so external pumps are currently use between electrolyte inlet and outlet of the electrolyse cell. These pumps consume energy and induce heat losses which makes the process very energy consuming and with high operative cost which makes it upscaling at a high production rate difficult.

An aim of the present invention is therefore to remedy the drawbacks of the prior art by providing a system for electrochemical iron production with an improved energy efficiency.

For this purpose, the invention is related to an apparatus for the production of iron metal through reduction of iron ore by an electrolysis reaction, this apparatus comprising a casing including a gas permeable anode plate, a cathode plate, both facing each other and being separated by an electrolyte chamber, the casing being provided with means for supplying an electrolyte within the chamber and with means to supply iron ore to said chamber, the casing further including a degassing unit comprising a gas recovery part extending along the opposite side of the anode plate to the chamber and an electrolyte recirculation part extending continuously from the gas recovery part up to a gas outlet and being in fluidic connection with the chamber, the apparatus further comprising a electrolyte circulation device including a pumping device located at one extremity of the casing and at least a first non-return device located in the electrolyte chamber and a second non-return device located in the gas recovery part, said electrolyte circulation device being designed, when actuating by an actuator, to aspirate the electrolyte from the electrolyte chamber or to pull the electrolyte back into the gas recovery part.

The apparatus may also include the following optional characteristics considered individually or according to all possible combination of techniques:
- the pumping device is located in the extremity of the casing opposite to the means for supplying the electrolyte,
- the pumping device is located outside of, but in fluidic connection with, the casing,
- the pumping device is located partly inside the casing,
- the non-return devices are elastic membranes made of electrically insulating material,
- the elastic membranes are made of Ethylene propylene diene monomer,
- the non-return devices are mechanical valves made of electrically insulating material,
- the actuator of is an hydraulic actuator,
- the apparatus is powered by renewable energy.

Other characteristics and advantages of the invention will be apparent in the below description, by way of indication and in no way limiting, and referring to the appended figures among which:

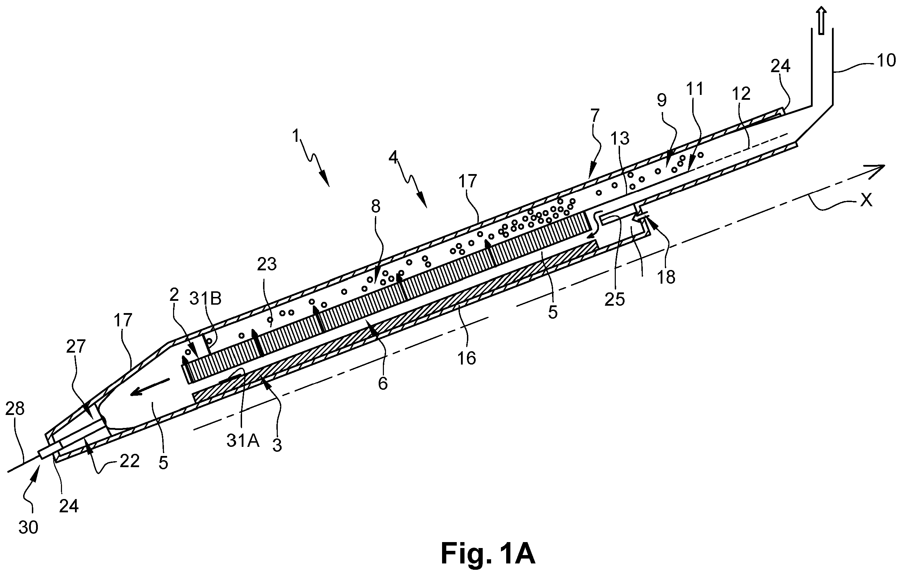

- Figure 1A, which represents a longitudinal section view of an apparatus according to the invention wherein the electrolyte circulation device is in aspiration mode,

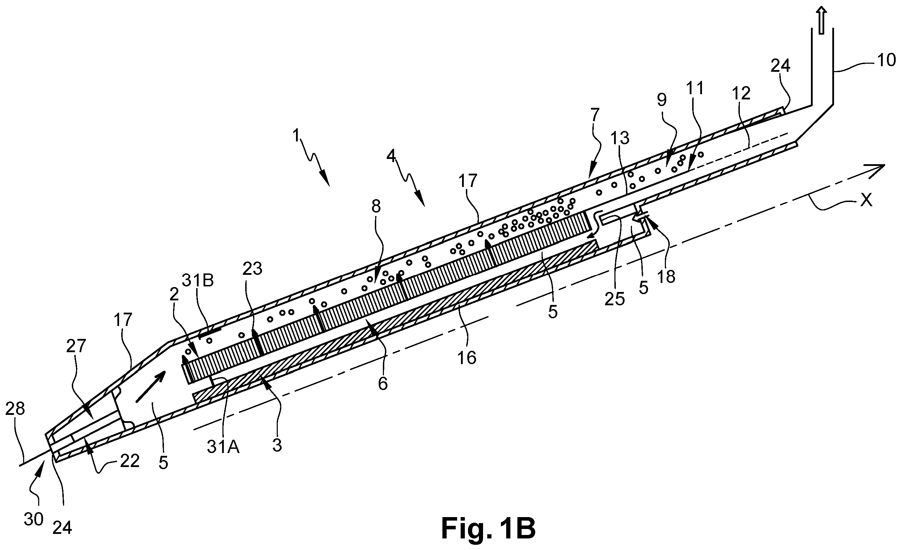

- Figure 1B, which represents a longitudinal section view of an apparatus according to the invention wherein the electrolyte circulation device is in pull-back mode,

First, it is noted that on the figures, the same references designate the same elements regardless of the figure on which they feature and regardless of the shape of these elements. Similarly, should elements not be specifically referenced in one of the figures, their references may be easily found by referring to another figure.

It is also noted that the figures represent mainly one embodiment of the object of the invention but other embodiments which correspond to the definition of the invention may exist. Elements in the figures are illustration and may not have been drawn to scale.

The invention refers to an apparatus 1 provided for the production of iron metal (Fe) through the reduction of iron ore, containing notably hematite (Fe₂O₃) and other iron oxides or hydroxides, by an electrolysis reaction. Said chemical reaction is well known and may be described by the following equation (1): ${Fe}_{2} {O}_{3} ↔ 2 Fe + \frac{3}{2} {O}_{2}$ (1)

It thus appears that the electrolysis reaction generates gases - mainly oxygen - that has to be extracted from the apparatus 1.

With reference to figures 1A and 1B, the apparatus 1, or electrolyse cell, comprises a casing 4 extending along a longitudinal axis X in which the electrolysis reaction occurs. Said casing 4 is delimited by a base plate 16, a cover plate 17 and two lateral plates 24. In addition, the casing includes a gas permeable anode plate 2 intended to be totally immersed in an electrolyte 5 and a cathode plate 3, both plates facing each other, and being kept at the required distance with fastening means (not depicted). The casing 4 also includes an electrolyte chamber 6 extending longitudinally between the anode plate 2 and the cathode plate 3 up to an evacuation chamber 27. The apparatus 1 finally comprises an electrical power source (not depicted) connected to the anode plate 2 and the cathode plate 3.

In order to produce iron metal through the electrolysis reaction, the electrolyte 5 - preferably a water-based solution, like a sodium hydroxide aqueous solution - flows through the casing 4 inside the electrolyte chamber 6 while the apparatus 1 is operating. The apparatus 1 thus comprises an inlet 18 managed in the casing 4 fluidically connected to the electrolyte chamber 6. Iron ore is preferentially supplied into the apparatus 1 as a powder suspension within the electrolyte 5 through the inlet 18.

During the electrolysis reaction, oxidised iron is reduced to iron metal according to reaction (1) and reduced iron is deposited on the cathode plate 3 while gaseous oxygen is generated. As depicted above, gases are generated inside the casing 4. Since these gases are electrical insulator, they prevent the good working of the electrolysis reaction and are thus continuously evacuated outside of the casing 4.

For this purpose, the casing 4 includes a degassing unit 7 comprising a gas recovery part 8 extending longitudinally along the opposite side 23 of the anode plate 2 to the electrolyte chamber 6. This gas recovery part 8 is a compartment provided to be filled with the electrolyte 5 and disposed between the anode plate 2 and the cover plate 17. Said gas recovery part 8 is thus provided to recover gases (dioxygen and dihydrogen) escaping through the anode plate 2.

As depicted in figures 1A and 1B, the degassing unit 7 also comprises an electrolyte recirculation part 9 extending in continuity with the gas recovery part 8 up to a gas outlet 10 managed in the casing 4. The electrolyte recirculation part 9 is provided to be at least partly filled with the electrolyte 5. In addition, said recirculation part 9 is in fluidic connection with the electrolyte chamber 6. When the apparatus 1 is operating, the recirculation part 9 allows the electrolyte 5 flowing from the gas recovery part 8 to be redirected towards the electrolyte chamber 6 preferentially via an elbow duct 25 of the electrolyte recirculation part 9 which is adjacent to the anode plate 2 and fluidically connected to the electrolyte chamber 6. This electrolyte recirculation part 9 preferentially comprises a gas-liquid partition mean (not represented) allowing to improve separation between the gases to be evacuated through the gas outlet 10 and the electrolyte to be recirculated within the electrolyte chamber 6. This gas-liquid partition mean may be for example a solid plate extending along the recirculation part 9 comprising perforations for the gas-liquid separation.

In the apparatus 1 according to the invention, the casing 4 further comprises an electrolyte recirculation device 30 including a pumping device 22 located at one of its extremity and at least two check valves 31A, 31B. Location at the extremity allows to take benefit of the full-width of the apparatus for pumping and thus increase the efficiency of the recirculation. It can be located externally (not represented) of the casing 4 or at least partly internally, as depicted in figures 1A and 1B. It is preferentially located at the bottom 27 of the cell, opposite to the electrolyte inlet 21. This pumping device 22 maybe a pneumatic membrane pump. It is activated by an actuator 24, said actuator maybe a pneumatic cylinder or a hydraulic actuator.

The person skilled in the art knows how to size the pumping device and which flow rate and frequency of pumping are needed according to the size of the electrolysis cell to insure a good recirculation of the electrolyte.

The pumping device 22 is associated to at least two check valves 31A, 31B, the first one 31A being located in the electrolyte chamber 6 and the second one 31B being located in the gas recovery part 8. These non-return flow-devices 31A, 31B maybe elastic membranes or mechanical valves. They are made of electrically insulating materials. When they are membranes, they may be made of Ethylene propylene diene monomer (EPDM). They may also be a combination of those different types of devices.

The working of the apparatus 1 during the electrolysis reaction will now be described.

The electrolyte 5 is continuously circulating inside a circuit, through the electrolyte chamber 6 from the inlet 18 towards the evacuation chamber 27 thanks to the pumping device 22 and the check valves 31A, 31B. The electrical power source connected both to the anode plate 2 and to the cathode plate 3 is turned on and the electrolyte chamber 6 is regularly fed with iron ore coming from the means 21 to supply iron ore to the apparatus 1. The casing 4 is almost filled with electrolyte 5, as depicted in figures 1A and 1B, and only the gas outlet 10 is free of electrolyte. In these conditions the electrolysis reaction may occur.

Iron ore is reduced, and pure iron is deposited on the cathode surface 3, while generated oxygen flow, together with the electrolyte, through the anode plate 2 towards the gas recovery part 8 of the degassing unit 7.

To allow gases circulation from the gas recovery part 8 towards the electrolyte recirculation part 9 and finally to the gas outlet 10, the longitudinal axis X is preferentially inclined relative to a horizontal direction following an angle comprised between 40° and 60°, preferentially 50°. The gas outlet 10 is thus in the highest position of the casing 4 to allow gases evacuation.

While circulating through the gas recovery part 8, the moving gases drive electrolyte 5 from said recovery part 8 to the recirculation part 9. The gases are continuously flowing toward the gas outlet 10, while the electrolyte 5 is driven by gravity to the electrolyte chamber 6 and recirculates in the circuit 20. This circulation with the gases is however not sufficient to insure a good recirculation of the electrolyte 5. The pumping device is thus continuously aspirate and pull back the electrolyte within the apparatus.

In aspiration mode as illustrated in figure 1A the first check valve 31A located in the electrolyte chamber 6 is opened while the second check valve 31B located in the gas recovery part 8 is closed. The pumping device 22 is activated by the actuator 28 to aspirate the electrolyte 5 from the electrolyte chamber 6.

In pull-back mode as illustrated in figure 1B the first check valve 31A located in the electrolyte chamber 6 is closed while the second check valve 31B located in the gas recovery part 8 is open. The pumping device 22 is activated by the actuator 28 to pull the electrolyte 5 back to the gas recovery part 8. In a preferred embodiment when the pumping device 22 is located in the bottom part of the cell the pulled-back flow superposes additively with the flow generated by the buoyancy of the gas escaping through the anode 2.

It is then possible to recirculate the electrolyte 5 within the electrolyte chamber 6 without inducing gas accumulation at the cathode level. This prevents the need to regularly inject a fresh electrolyte flow within the apparatus 1.

In all the previously described embodiments the apparatus is preferentially powered by renewable energy which is defined as energy that is collected from renewable resources, which are naturally replenished on a human timescale, including sources like sunlight, wind, rain, tides, waves, and geothermal heat. In some embodiments, the use of electricity coming from nuclear sources can be used as it is not emitting CO2 to be produced. This further limit the CO2 footprint of the iron production process.

## Claims

1. An apparatus (1) for the production of iron metal through reduction of iron ore by an electrolysis reaction, said electrolysis reaction generating a gas, the apparatus comprising a casing (4) including a gas permeable anode plate (2), a cathode plate (3), both facing each other and being separated by an electrolyte chamber (6),
said casing (4) being provided with means for supplying an electrolyte (5) within the chamber (6) and with means to supply iron ore to said chamber (6),
the casing (4) further including a degassing unit (7) comprising a gas recovery part (8) extending along the opposite side (23) of the anode plate (2) to the chamber (6) and an electrolyte recirculation part (9) extending continuously from the gas recovery part (8) up to a gas outlet (10) and being in fluidic connection with the chamber (6),
the apparatus further comprising a electrolyte circulation device (30) including a pumping device (22) located at one extremity of the casing (4) and at least a first (31A) check valve located in the electrolyte chamber (6) and a second (31B) check valve located in the gas recovery part (8), said electrolyte circulation device (30) being designed, when actuating by an actuator (28), to aspirate the electrolyte (5) from the electrolyte chamber (6) or to pull the electrolyte (5) back into the gas recovery part (8).

2. An apparatus according to claim 1 wherein the pumping device (22) is located in the extremity of the casing (4) opposite to the means for supplying the electrolyte (5).

3. An apparatus according to claim 1 or 2 wherein the pumping device (22) is located outside of, but in fluidic connection with, the casing (4).

4. An apparatus according to claim 1 or 2 wherein the pumping device (22) is located partly inside the casing (4).

5. An apparatus according to anyone of the previous claims wherein the check valves (31A, 31B) are elastic membranes made of electrically insulating material.

6. An apparatus according to claim 5 wherein said elastic membranes are made of Ethylene propylene diene monomer.

7. An apparatus according to claim 1 to 4 wherein the check valves (31A,31B) are mechanical valves made of electrically insulating material.

8. An apparatus according to anyone of the previous claims wherein the actuator (28) is a hydraulic actuator.

9. An apparatus according to anyone of the previous claims which is powered by renewable energy.

## Patentansprüche

1. Vorrichtung (1) zur Herstellung von Eisenmetall durch Reduktion von Eisenerz mittels einer Elektrolysereaktion, wobei die Elektrolysereaktion ein Gas erzeugt, wobei die Vorrichtung ein Gehäuse (4) umfasst, das eine gasdurchlässige Anodenplatte (2), eine Kathodenplatte (3) einschließt, die beide einander gegenüberliegen und durch eine Elektrolytkammer (6) getrennt sind,
wobei das Gehäuse (4) mit Mitteln zum Zuführen eines Elektrolyten (5) innerhalb der Kammer (6) und mit Mitteln zum Zuführen von Eisenerz zu der Kammer (6) versehen ist,
wobei das Gehäuse (4) ferner eine Entgasungseinheit (7) einschließt, die einen Gasrückgewinnungsteil (8), der sich entlang der der Kammer (6) gegenüberliegenden Seite (23) der Anodenplatte (2) erstreckt, und einen Elektrolytrückführungsteil (9) umfasst, der sich kontinuierlich von dem Gasrückgewinnungsteil (8) bis zu einem Gasauslass (10) erstreckt und in fluidischer Verbindung mit der Kammer (6) steht,
wobei die Vorrichtung ferner eine Elektrolytzirkulationsvorrichtung (30) umfasst, die eine an einem Ende des Gehäuses (4) angeordnete Pumpvorrichtung (22) und mindestens ein erstes (31A) Rückschlagventil, das in der Elektrolytkammer (6) angeordnet ist, und ein zweites (31 B) Rückschlagventil, das in dem Gasrückgewinnungsteil (8) angeordnet ist, einschließt, wobei die Elektrolytzirkulationsvorrichtung (30) dazu ausgelegt ist, bei Betätigung durch einen Aktuator (28) den Elektrolyten (5) aus der Elektrolytkammer (6) abzusaugen oder den Elektrolyten (5) zurück in den Gasrückgewinnungsteil (8) zu ziehen.

2. Vorrichtung nach Anspruch 1, wobei die Pumpvorrichtung (22) in dem Ende des Gehäuses (4) angeordnet ist, das den Mitteln zum Zuführen des Elektrolyten (5) gegenüberliegt.

3. Vorrichtung nach Anspruch 1 oder 2, wobei die Pumpvorrichtung (22) außerhalb des Gehäuses (4), jedoch in fluidischer Verbindung mit diesem, angeordnet ist.

4. Vorrichtung nach Anspruch 1 oder 2, wobei die Pumpvorrichtung (22) teilweise innerhalb des Gehäuses (4) angeordnet ist.

5. Vorrichtung nach einem der vorhergehenden Ansprüche, wobei die Rückschlagventile (31A, 31 B) elastische Membranen aus elektrisch isolierendem Material sind.

6. Vorrichtung nach Anspruch 5, wobei die elastischen Membranen aus Ethylen-Propylen-Dien-Monomer hergestellt sind.

7. Vorrichtung nach Anspruch 1 bis 4, wobei die Rückschlagventile (31A,31 B) mechanische Ventile aus elektrisch isolierendem Material sind.

8. Vorrichtung nach einem der vorhergehenden Ansprüche, wobei der Aktuator (28) ein hydraulischer Aktuator ist.

9. Vorrichtung nach einem der vorhergehenden Ansprüche, die durch erneuerbare Energie betrieben wird.

## Revendications

1. Appareil (1 ) destiné à la production de fer métallique par réduction de minerai de fer par une réaction d'électrolyse, ladite réaction d'électrolyse générant un gaz, l'appareil comprenant un boîtier (4) incluant une plaque d'anode (2) perméable aux gaz, une plaque de cathode (3), toutes deux se faisant face et étant séparées par une chambre d'électrolyte (6),
ledit boîtier (4) étant pourvu de moyens pour fournir un électrolyte (5) à l'intérieur de la chambre (6) et de moyens pour fournir du minerai de fer à ladite chambre (6),
le boîtier (4) incluant en outre une unité de dégazage (7) comprenant une partie de récupération de gaz (8) s'étendant le long du côté (23) de la plaque d'anode (2) opposé à la chambre (6) et une partie de recirculation d'électrolyte (9) s'étendant de manière continue depuis la partie de récupération de gaz (8) jusqu'à une sortie de gaz (10) et étant en communication fluidique avec la chambre (6),
l'appareil comprenant en outre un dispositif de circulation d'électrolyte (30) incluant un dispositif de pompage (22) situé à une extrémité du boîtier (4) et au moins une première (31A) soupape de retenue située dans la chambre d'électrolyte (6) et une seconde (31 B) soupape de retenue située dans la partie de récupération de gaz (8), ledit dispositif de circulation d'électrolyte (30) étant conçu, lors de son actionnement par un actionneur (28), pour aspirer l'électrolyte (5) depuis la chambre d'électrolyte (6) ou pour ramener l'électrolyte (5) dans la partie de récupération de gaz (8).

2. Appareil selon la revendication 1, dans lequel le dispositif de pompage (22) est situé dans l'extrémité du boîtier (4) opposée aux moyens pour fournir l'électrolyte (5).

3. Appareil selon la revendication 1 ou 2, dans lequel le dispositif de pompage (22) est situé à l'extérieur du boîtier (4), mais en communication fluidique avec celui-ci.

4. Appareil selon la revendication 1 ou 2, dans lequel le dispositif de pompage (22) est situé partiellement à l'intérieur du boîtier (4).

5. Appareil selon l'une quelconque des revendications précédentes, dans lequel les soupapes de retenue (31A, 31 B) sont des membranes élastiques faites d'un matériau électriquement isolant.

6. Appareil selon la revendication 5, dans lequel lesdites membranes élastiques sont faites de monomère d'éthylène-propylène-diène.

7. Appareil selon les revendications 1 à **4,** dans lequel les soupapes de retenue (31A,31 B) sont des soupapes mécaniques faites d'un matériau électriquement isolant.

8. Appareil selon l'une quelconque des revendications précédentes, dans lequel l'actionneur (28) est un actionneur hydraulique.

9. Appareil selon l'une quelconque des revendications précédentes, qui est alimenté par une énergie renouvelable.
